# EUROPEAN PATENT APPLICATION

(11) **EP 1 223 394 A1**
(43) Date of publication of application: **17.07.2002**
(21) Application number: 02250252.0
(22) Date of filing: 15.01.2002
(51) Int. Cl.: F25D 16/00, A23L 3/36

(54) **Method and apparatus for freezing products**

(30) Priority: 15.01.2001 GB 0101013
(71) Applicant: AIR PRODUCTS AND CHEMICALS, INC., Allentown, PA 18195-1501 (US)
(72) Inventor: Miller, Jeremy Paul, Berkshire RG7 3NR (GB)
(74) Representative: Lucas, Brian Ronald

(57) **Abstract**

A method of freezing a product, which method comprises the steps of vaporising a cryogenic liquid and warming the vapour thus formed with a product to be frozen, characterised by using the warmed vapour thus obtained to cool compressed gaseous refrigerant in a mechanical refrigeration system before expansion thereof.

## Description

### Field of the Invention

This invention relates to a method and apparatus for freezing products and, more particularly but not exclusively, is concerned with a method and apparatus for freezing foodstuffs.

### Background of the Invention

The use of liquid nitrogen to freeze foodstuffs has increased dramatically over the past 30 years. The improvement in the quality of the frozen food is well known. However, whilst liquid nitrogen is now used for freezing premium food products its cost prevents it being used for freezing those foodstuffs which do not command a premium price. These foodstuffs are typically frozen using mechanical refrigeration.

Over the years many attempts have been made to reduce the quantity of liquid nitrogen required to freeze a given foodstuff and gradually it has become economically viable to use liquid nitrogen to freeze an increasing range of foodstuffs.

The present invention aims to continue this trend. In particular, in existing cryogenic tunnel freezers the gaseous cryogen is typically vented at about -40°C. Although the emerging gas is still cold it is too warm to have any practical value in the context of food freezing in a tunnel freezer. Normally, the cold vapour is vented direct to atmosphere. However, some installations pipe the cold vapour to indirect heat exchange coils inside a cold store where it is used to help reduce the heat load on an independent mechanical refrigeration system.

Whilst this arrangement does make some use of the residual cold it is not a particularly efficient use.

### Summary of the Invention

According to the present invention there is provided a method of freezing a product, which method comprises the steps of vaporising a cryogenic liquid and warming the vapour thus formed with a product to be frozen without passing the vapour through a work expander, and using the warmed vapour thus obtained to cool compressed refrigerant in a mechanical refrigeration system before expansion thereof.

The cooled compressed refrigerant will normally be in the gaseous phase although it could also be condensed vapour.

Whilst the cryogenic liquid will usually be liquid nitrogen, it could also comprise another cryogenic liquid, for example liquid air.

If desired, the vapour may be brought into direct heat exchange with said product to refrigerate the same. Alternatively, the vapour may be brought into indirect heat exchange with said product to refrigerate the same.

In one embodiment, said mechanical refrigeration system has a refrigerated space and said method includes the step of passing said product through said refrigerated space after freezing at least the surface thereof with cryogenic fluid.

In another embodiment, said mechanical refrigeration system has a refrigerated space and said method includes the step of passing said product through said refrigerated space before freezing it with cryogenic fluid.

Preferably, said product is a foodstuff.

The present invention also provides an apparatus for freezing a product, which apparatus comprises a freezer adapted to be cooled by a cryogenic fluid without a work expander, a mechanical refrigeration system having a compressor, a heat exchanger for, in use, cooling compressed refrigerant, and means for expanding said compressed refrigerant, characterised by means for conveying cryogenic fluid from said freezer to said or another heat exchanger to, in use, cool compressed refrigerant prior to expansion thereof.

Advantageously, said mechanical refrigerator comprises a refrigerated space.

In one embodiment, said refrigerated space is disposed downstream of said freezer.

In another embodiment, said refrigerated space is disposed upstream of said freezer.

In a further embodiment there are two refrigerated spaces (which may be associated with a single mechanical refrigerator or separate and distinct mechanical refrigerators) one of which is disposed upstream of said freezer and the other of which is disposed downstream thereof.

For a better understanding of the present invention reference will now be made, by way of example, to the accompanying drawings, in which:-

### Brief description of the Drawings

Figure 1 is a schematic side elevation, partly in cross-section, of one embodiment of an apparatus according to the present invention; and
Figure 2 is a schematic side elevation, partly in cross-section, of a second embodiment of an apparatus according to the present invention.

### Detailed description of the preferred embodiments

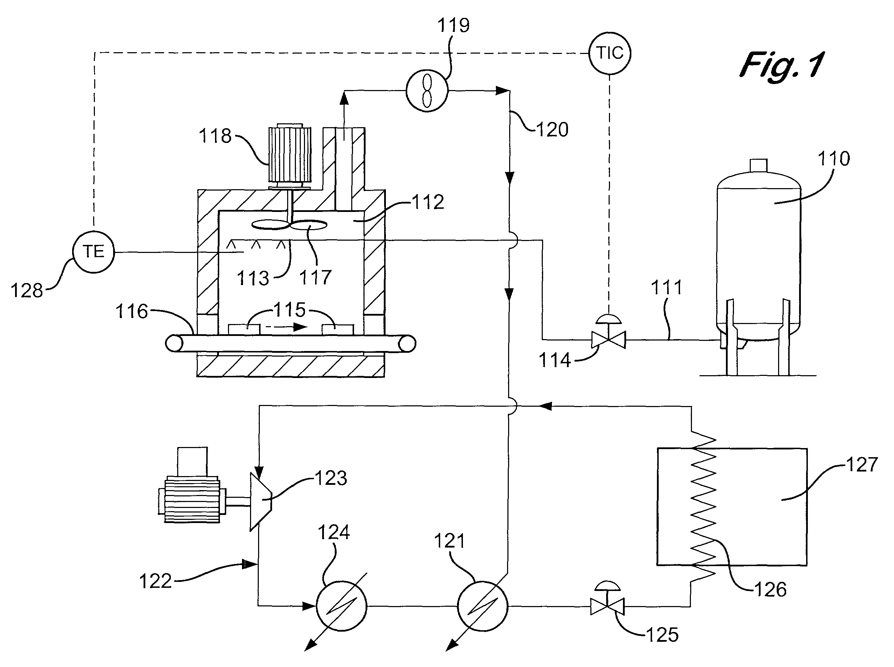

Referring to Figure 1 there is shown a cryogenic storage vessel which is generally identified by reference numeral 110.

A pipe 111 is arranged to convey liquid nitrogen at minus 196°C from the cryogenic storage vessel 110 and introduce it into a freezing tunnel 112 via a spray header 113 at a flow rate which is controlled by valve 114 to maintain the temperature at a temperature sensor 128 substantially constant.

The liquid nitrogen evaporates in the freezing tunnel 112 and refrigerates food 115 being transported on a conveyor 116 through the freezing tunnel 112. Heat transfer between the nitrogen vapour and the food 115 is enhanced by a turbulence inducing fan 117 which is driven by an electric motor 118.

The nitrogen vapour leaves the freezing tunnel 112 and is then blown by a fan 119 through duct 120 to a heat exchanger 121 where it is used to cool gaseous refrigerant in a mechanical refrigeration system which is generally identified by reference numeral 122.

The mechanical refrigeration system 122 comprises a compressor 123, a heat exchanger 124, water cooled heat exchanger 121, an expansion valve 125 and a refrigeration coil 126 in a refrigerated space 127.

In use the pressure in the cryogenic storage vessel 110 is kept somewhere between 1.5 and 3.5 bar g by a conventional evaporator arrangement. In particular, when the pressure falls to 1.5 bar g a small amount of liquid nitrogen is drawn off and evaporated in a local heat exchanger (not shown). Nitrogen expands by a factor of about 700 when it evaporates and the vapour is introduced into the top of the cryogenic storage vessel 110. When the pressure reaches 3.5 bar g the flow of nitrogen to the local heat exchanger is terminated and remains terminated until the pressure in the cryogenic storage vessel 10 drops to 1.5 bar g when the cycle is repeated.

It will be noted that the present invention does NOT utilise a work expander which is an essential feature of the applicants previous work described in UK 9916487.3, UK 0003160.9 and overseas patent applications corresponding thereto (all unpublished at the priority date hereof).

One of the problems with mechanical refrigeration is that in order to achieve a significantly low temperature it is necessary to arrange several refrigerators in cascade with the refrigeration from the first refrigerator used to cool the compressed gas of the next refrigerator prior to expansion thereof.

Although a single refrigeration unit is relatively inexpensive the capital cost increases significantly as the number of stages increases.

By using reject cryogenic vapour to cool the compressed refrigerant in the mechanical refrigeraor prior to expansion significant refrigeration can be achieved whilst saving at least one mechanical refrigeration stage.

An interesting further step is that instead of rejecting the cryogenic vapour at around the conventional temperature of -40°C it may be advantageous to reject the cryogenic vapour at a significantly lower temperature, for example -60°C or colder, or even -70°C or colder.

As the temperature decreases the cryogenic freezing becomes less efficient but the temperature of the mechanical refrigeration system falls and the speed of cooling in the mechanical refrigerator increases. Clearly there is a balance which can be optimised for any given set of requirements.

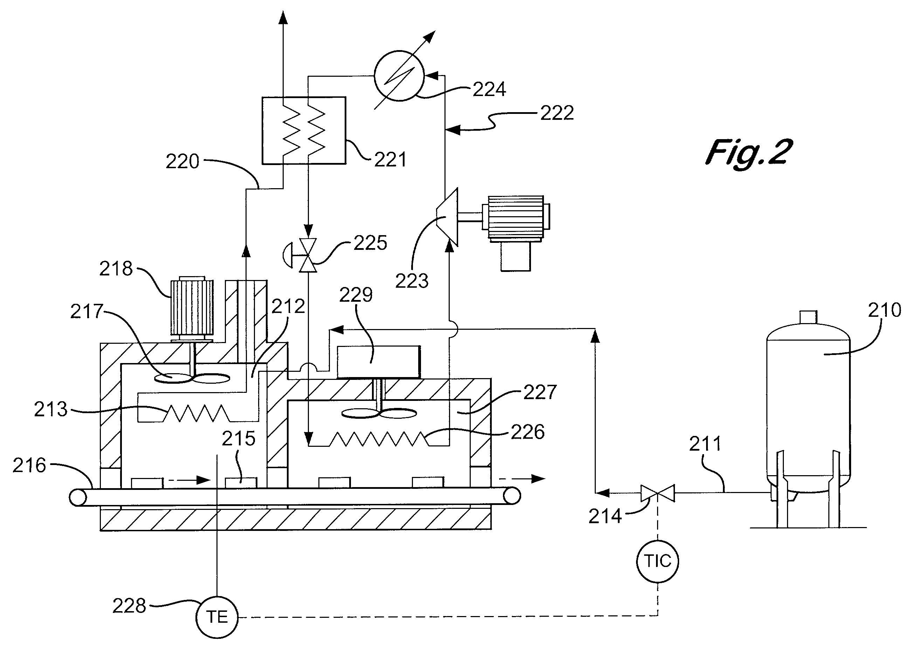

Turing now to Figure 2, there is shown an apparatus which is generally similar to the apparatus shown in Figure 1 and parts having similar functions to parts shown in Figure 1 have been identified by the same reference numerals in the '200' series.

The main differences are that the spray bar 113 has been replaced by an indirect heat exchanger 213 with the result that the fan 119 becomes redundant. In addition the refrigerated space 227 is now disposed immediately downstream of the freezing tunnel 212 and the conveyor 216 carries the food sequentially through the freezing tunnel 212 where it can obtain a crust freeze before passing through the refrigerated space 227 where it can equilibrate. The refrigerated space 227 is provided with a turbulence inducing fan 229 to enhance heat transfer to the food 215 as it passes through the refrigerated space 227. The expanded refrigerant entering the refrigeration coil 226 will typically be at a temperature of from -40°C to -80°C.

Various modifications to the arrangements described are available. For example, the refrigerated space 227 could be placed upstream of the freezing tunnel 212. Alternatively, a refrigerated space could be placed both upstream and downstream of the freezing tunnel 212. Each of such refrigerated spaces could be serviced by the same mechanical refrigerator or by separate and distinct mechanical refrigerators.

In order to maintain high standards of hygiene many tunnel freezers are stopped and steam cleaned at frequent intervals, for example every 24 hours for a single product freezer, or every 6 or 7 hours when freezing small runs of gourmet products. Before the freezing tunnel can be reused it must be cooled down. This is conventionally effected by introducing liquid nitrogen into the freezing tunnel until the desired temperature is reached. It will be appreciated that whilst the use of liquid nitrogen for initial cooldown is very quick it is also very expensive. Significant cost savings can be made by using external electrical power to mechanically cool the refrigerated spaces and drawing the cold air therefrom through the freezing tunnel to achieve part of the initial cooldown.

As indicated previously, liquid air may be used as the cryogenic liquid although liquid nitrogen is preferred.

## Claims

1. A method of freezing a product, which method comprises the steps of vaporising a cryogenic liquid and warming the vapour thus formed with a product to be frozen without passing the vapour through a work expander, and using the warmed vapour thus obtained to cool compressed refrigerant in a mechanical refrigeration system before expansion thereof.

2. A method according to Claim 1, wherein said cryogenic liquid is liquid nitrogen.

3. A method according to Claim 1 or 2, wherein the vapour is brought into direct heat exchange with said product to refrigerate the same.

4. A method according to Claim 1 or 2, wherein the vapour is brought into indirect heat exchange with said product to refrigerate the same.

5. A method according to any preceding Claim, wherein, said mechanical refrigeration system has a refrigerated space and said method includes the step of passing said product through said refrigerated space after freezing at least the surface thereof with cryogenic fluid.

6. A method according to any preceding Claim, wherein said mechanical refrigeration system has a refrigerated space and said method includes the step of passing said product through said refrigerated space before freezing it with cryogenic fluid.

7. A method as claimed in any preceding Claim, wherein said product is a foodstuff.

8. An apparatus for freezing a product, which apparatus comprises a freezer (112;212) adapted to be cooled by a cryogenic fluid without a work expander, a mechanical refrigeration system (122;222) having a compressor (123;223), a heat exchanger (124;224) for, in use, cooling compressed refrigerant, and means (125;225) for expanding said compressed refrigerant, **characterised by** means (120;220) for conveying cryogenic fluid from said freezer (112;212) to said or another heat exchanger (121;221) to, in use, cool compressed refrigerant prior to expansion thereof.

9. An apparatus as claimed in Claim 8, wherein said mechanical refrigerator comprises a refrigerated space (127;227).

10. An apparatus as claimed in Claim 9, wherein said refrigerated space (227) is disposed downstream of said freezer (212).

11. An apparatus as claimed in Claim 9 or 10, wherein said refrigerated space is disposed upstream of said freezer.
